# EUROPÄISCHE PATENTANMELDUNG

(11) **EP 4 844 966 A2**
(43) Veröffentlichungstag der Anmeldung: **25.11.2026**
(21) Anmeldenummer: 26202891.3
(22) Anmeldetag: 15.04.2021
(51) Int. Cl.: H02G 3/32

(54) **KLEMMPLATTE UND ENDBEFESTIGUNG EINER FLEXIBLEN UMHÜLLUNG FÜR REINRAUMANWENDUNGEN**

(30) Priorität: 15.04.2020 DE 202020102090 U
(62) Dokumentnummer(n) der früheren Anmeldung(en) nach Art. 76 EPÜ: 21728282.1 / 4 136 374
(71) Anmelder: igus SE & Co. KG, 51147 Köln (DE)
(72) Erfinder: Hermey, Andreas, 53773 Hennef (DE); Barten, Dominik, 53340 Meckenheim (DE); Mattonet, Peter, 51427 Bergisch Gladbach (DE)
(74) Vertreter: Lippert Stachow Patentanwälte Rechtsanwälte

(57) **Zusammenfassung**

Die Erfindung allgemein eine Leitungsführungsvorrichtung (1) für Leitungen, wie z.B. Kabel, Schläuche oder dgl., insbesondere für eine Reinraumanwendung, und insbesondere deren Endbefestigung. Die Erfindung betrifft insbesondere eine Klemmplatte (210, 310) einer Endbefestigung für eine flexible Umhüllung (2) mit Leitungen, umfassend zwei kurze Schmalseiten parallel zu einer Längsrichtung, die einer Längsrichtung einer festzulegenden Stützkette entspricht, und zwei lange Stirnseiten parallel zu einer Querrichtung, sowie zwei abgewandte Hauptflächen parallel zu einer Hauptebene, wobei
an jeder Stirnseite eine in Längsrichtung offene stirnseitige Haltenut vorgesehen ist, welche mit durchgehend gleichem Querschnitt von der einen zur anderen Schmalseite verläuft und dort in Querrichtung offen mündet, sodass insbesondere Halteelemente, z.B. für Enden zu führender Leitungen oder für endseitige Kettenglieder, mittels in beide Haltenuten eingreifender Zungen in Querrichtung einschiebbar und verschiebbar an der Klemmplatte montierbar sind.

## Beschreibung

Die Erfindung betrifft allgemein Leitungsführungsvorrichtungen für Leitungen, wie z.B. Kabel, Schläuche oder dgl., insbesondere in einer Reinraumanwendung, nämlich Leitungsführungsvorrichtungen die hin- und hergehend, verfahrbar sind unter Bildung eines Umlenkbogens zwischen zwei Trumen, die von einem ersten Ende und einem zweiten Ende ausgehen.

Die Erfindung betrifft insbesondere verbesserte Endbefestigungen für solche dynamischen Leitungsführungsvorrichtungen.

Die vorliegend als gattungsgemäß betrachteten Leitungsführungsvorrichtungen für Reinraumanwendungen haben typisch eine oder mehrere längliche und flexible Umhüllungen, die meist kanalartige Aufnahmen für Leitungen aufweisen, welche sich in Längsrichtung durchgehend erstrecken und in einer Querrichtung nebeneinanderliegen. Solche schlauchartigen Umhüllungen bzw. ihre Aufnahmen werden auch als sog. "Pods" bezeichnet und schützen unter anderem vor Austreten von Abriebpartikeln die beim Verfahren der Leitungen entstehen.

Für die meisten Anwendungen ist eine erste Endbefestigungsvorrichtung für das erste Ende und eine zweite Endbefestigungsvorrichtung für das zweite Ende der Leitungsführungsvorrichtungen vorgesehen. Die Endbefestigungsvorrichtungen dienen zum Anschluss der Enden an einer von zwei Anschlussstellen, z.B. einer Maschine, wobei mindestens eine der Anschlussstellen relativ zur anderen beweglich ist.

Ein Beispiel einer solchen Leitungsführungsvorrichtung mit speziell hierfür geeigneten Endbefestigungsvorrichtungen ist in WO 2021 004654 A1.

Eine weitere gattungsgemäße Leitungsführungsvorrichtung mit Stützketten und einer besonderen Endbefestigungsvorrichtung ist in DE 10 2012 100 290 B4 beschrieben, deren Bauweise jedoch relativ aufwendig ist, da zusätzliche Bauteile zum endseitigen Verschließen der Aufnahmen vorgesehen sind.

Bei gattungsgemäßer Bauweise hat die Leitungsführungsvorrichtung eine längliche, flexible Umhüllung, die hin- und hergehend verfahrbar ist, und eine Anzahl von kanalartigen, sich in einer Längsrichtung von einem ersten Ende zu einem zweiten Ende erstreckenden Aufnahmen für Leitungen aufweist. Die Aufnahmen sind in einer Querrichtung seitlich nebeneinanderliegend angeordnet, und die Umhüllung ist hin- und hergehend, insbesondere unter Bildung von zwei Trumen mit einem Umlenkbogens dazwischen verfahrbar. Weiterhin hat die Leitungsführungsvorrichtung zwei Stützketten, die sich Längsrichtung vom ersten Ende zum zweiten Ende der flexiblen Umhüllung erstrecken um diese zu stützen, und die eine Vielzahl einzelner Kettenglieder umfassen, die gelenkig miteinander verbunden sind. Jedes Kettenglied hat einen Körper mit zwei äußeren Seitenflächen und korrespondierende erste und zweite Gelenkelemente, die zur schwenkbaren Verbindung zweier Kettenglieder in einer Ebene im Wesentlichen senkrecht zur Querrichtung gestaltet sind. An den Enden der Umhüllung sind jeweils eine erste Endbefestigungsvorrichtung zum Festlegen des ersten Endes der Umhüllung und der Stützkette, und eine zweite Endbefestigungsvorrichtung zum Festlegen des zweiten Endes der Umhüllung und der Stützkette vorgesehen.

Eine Endbefestigungsvorrichtung nach dem Oberbegriff aus Anspruch 1 ist aus der DE 10 2012 100 533 A1 bekannt. Hierbei hat jede der endseitigen Endbefestigungsvorrichtungen mindestens ein Kettenglied-Halteelement zum Arretieren eines zugeordneten endseitigen Kettenglieds der Stützkette in Längsrichtung, insbesondere zwischen zwei Klemmteilen.

Eine erste Aufgabe eines Aspekts der Erfindung ist es, die Bauweise der Endbefestigungsvorrichtung zu vereinfachen, insbesondere hinsichtlich der Teileanzahl, und die vorzugsweise die Montage und Demontage zu vereinfachen.

Eine zweite, unabhängige Aufgabe eines weiteren Aspekts der Erfindung ist es, die Klemmteile der Endbefestigungsvorrichtung zu verbessern, sodass insbesondere die Montage und Demontage vereinfacht wird.

### ERSTER ASPEKT

Zur Lösung der erstgenannten Aufgabe wird eine Leitungsführungsvorrichtung nach dem Oberbegriff aus Anspruch 1 bzw. ein Bausatz für eine Endbefestigungsvorrichtung, nach dem Oberbegriff aus Anspruch 2, verbessert.

In einfachster Ausführungsform wird die Verbesserung bereits dadurch erzielt:
- dass die Stützkette zwei endseitige Kettenglieder aufweist, die beide jeweils zwei voneinander abgewandte Arretier-Vorsprünge umfassen bzw. aufweisen und/oder bilden, die jeweils in einer Richtung im Wesentlichen parallel zur Querrichtung der Stützkette bzw. Umhüllung, seitlich an einer der äußeren Seitenflächen vorstehen, insbesondere sowohl über die ersten und zweiten Gelenkelemente des endseitigen Glieds hinaus;
- dass die Kettenglied-Halteelemente beider Endbefestigungsvorrichtung jeweils zwei seitlich und in Querrichtung gegenüberliegende Halte-Vertiefungen aufweisen; und
- dass die Arretier-Vorsprünge beider endseitiger Kettenglieder zum Arretieren jeweils in die Halte-Vertiefungen im zugeordneten Kettenglied-Halteelement eingreifen, zum Arretieren der Stützkette in Längsrichtung.

Die Kombination der Gestaltung beidseitig seitlicher Arretier-Vorsprünge an den Endgliedern mit entsprechender Gestaltung spezieller Kettenglied-Halteelemente erlaubt es an beiden Enden der Stützkette eine gleichartig aufgebaute Arretierung bzw. Längssicherung der Stützkette zu verwenden, sodass die Teilezahl reduziert wird. Weiterhin kann die Handhabung spürbar vereinfacht werden, da die vorgeschlagene Lösung es erlaubt, mit jeweils zwei - vorzugsweise gleichartige Halteelementen - jedes Endglied zu sichern.

Die Arretier-Vorsprünge an den endseitigen Kettengliedern sind zweckbestimmt zur Arretierung und zusätzlich zu den Gelenkelementen, insbesondere zusätzlich zu Gelenkbolzen, vorgesehen, sodass diese ggf. auch robuster und z.B. mit größerem Durchmesser ausgeführt werden können.

Weiterhin erlaubt die vorgeschlagene Lösung ein Einklemmen der Umhüllung mit den Endgliedern zwischen geeignet gestalteten Halteelementen, so dass ein besserer Verschluss gegen Partikelaustritt aus der Umhüllung erzielt werden kann.

Entsprechend umfasst der vorgeschlagene Bausatz mindestens eine gattungsgemäße Stützkette, vorzugsweise zwei Stützketten, die sich Längsrichtung von einem ersten Ende zu einem zweiten Ende erstreckt, und die eine Vielzahl einzelner Kettenglieder umfasst, die gelenkig miteinander verbunden sind, wobei jedes Kettenglied einen Körper mit zwei äußeren Seitenflächen und korrespondierende erste und zweite Gelenkelemente aufweist, die zur schwenkbaren Verbindung zweier Kettenglieder in einer Ebene, die im Wesentlichen senkrecht zu einer Querrichtung der Längsrichtung liegt, gestaltet sind. Weiterhin umfasst der Bausatz zwei Kettenglied-Halteelemente zum Arretieren in Längsrichtung jeweils eines zugeordneten endseitigen Kettenglieds am ersten bzw. zweiten Ende der Stützkette, insbesondere zwischen zwei Klemmplatten.

Erfindungsgemäß zeichnet sich der Bausatz für eine Endbefestigung dadurch aus,
i) dass die Stützkette zwei endseitige Kettenglieder aufweist, die zum Arretieren in Längsrichtung bestimmt sind und beide jeweils zwei voneinander abgewandte Arretier-Vorsprünge umfassen bzw. aufweisen und/oder bilden, die jeweils in Richtung im Wesentlichen parallel zur Querrichtung, insbesondere seitlich an einer der äußeren Seitenflächen und über die ersten und zweiten Gelenkelemente hinaus vorstehen;
ii) dass beide Kettenglied-Halteelemente jeweils zwei seitlich und in Querrichtung gegenüberliegende Halte-Vertiefungen aufweisen; und
iii) dass die Arretier-Vorsprünge beider endseitiger Kettenglieder zum Arretieren mit jeweils beiden Halte-Vertiefungen im zugeordneten Kettenglied-Halteelement eingreifend zusammenwirken.

Ungeachtet der Bauweise der verwendeten Umhüllung und Stützkette, sind mit diesem Bausatz ebenfalls die vorgenannten Vorteile erzielbar, d.h. der Bausatz ist zur Realisierung einer verbesserten Endbefestigung geeignet und bestimmt.

In einer Ausführungsform kann vorgesehen sein, dass jedem der endseitigen Kettenglieder jeweils ein Paar Kettenglied-Halteelemente zugeordnet sind, die einander zugewandt und bezüglich einer Hauptebene parallel zur Längsrichtung und Querrichtung gegenüberliegend angeordnet bzw. anordenbar sind, und jeweils zwei in Längsrichtung verlaufende gegenüberliegenden Seitenwände aufweisen, wobei jedes Kettenglied-Halteelement eines Paars zwischen den Seitenwänden eine zur Hauptebene und in Längsrichtung offene Aufnahme für ein endseitiges Kettenglied bildet, wobei die Aufnahme vorzugsweise wenigstens 25% bis zu nahezu 50% der Bauhöhe des endseitigen Kettenglieds aufnimmt, wobei in jeder Seitenwand je eine Halte-Vertiefung vorgesehen ist, insbesondere zur Aufnahme und zur Hauptebene hin offen vorgesehen ist, sodass zwei gegenüberliegende Halte-Vertiefungen jeweils einen der Arretier-Vorsprünge beidseitig zumindest teilweise, vorzugsweise im Wesentlichen vollständig umgreifen.

Hierbei können alle Kettenglied-Halteelemente vorzugsweise baugleich ausgeführt sein, was die Teileanzahl reduziert und Handhabung vereinfacht.

In einer Ausführungsform kann vorgesehen sein, dass die Arretier-Vorsprünge vorzugsweis in einem in Längsrichtung mittleren Bereich des Kettenglieds zwischen Endbereichen mit den korrespondierende ersten und zweiten Gelenkelementen vorgesehen sind.

In einer vorteilhaften Ausführungsform der Kettenglied-Halteelemente kann vorgesehen sein, dass die in Längsrichtung verlaufenden gegenüberliegenden Seitenwände jedes Kettenglied-Halteelements eine obere Fläche im Wesentlichen parallel zur Hauptebene aufweisen, an welchen Greif- bzw. Krallenelemente zur Längssicherung einer die Stützkette umgebenden Umhüllung vorgesehen sind. Somit wird eine bessere Sicherung der gesamten Leitungsführung inkl. Umhüllung erzielt.

In einer weiteren vorteilhaften Ausführungsform der Kettenglieder-Halteelemente kann vorgesehen sein, dass alle Kettenglied-Halteelemente baugleich und einteilig ausgeführt sind und vorzugweise aus Kunststoff hergestellt sind, insbesondere als Spritzgussteile.

In einer weiteren vorteilhaften Ausführungsform der Kettenglieder-Halteelemente kann das bzw. jedes der Kettenglied-Halteelemente an einer Vorderseite eine zur Hauptebene und in Längsrichtung offene Aufnahme für ein endseitiges Kettenglied bildet und an einer Rückseite an beiden Längsenden einander zugewandte Zungen aufweist zur Verbindung, insbesondere in Art einer Feder-Nut-Verbindung, mit jeweils einer von zwei abgewandten stirnseitigen Haltenuten an einer Klemmplatte der Endbefestigung.

In einer vorteilhaften Ausführungsform der Kettenglieder der Stützkette kann vorgesehen sein, dass die Kettenglieder mit einem einteiligen Körper aus Kunststoff hergestellt sind, insbesondere als Spritzgussteile. Hierbei können die zwei voneinander abgewandten Arretier-Vorsprünge eines endseitigen Kettenglieds jeweils durch die Enden eines eine Queröffnung im Kettenglied durchgreifenden und beidseitig seitlich vorstehenden separaten Bolzens, Zapfens oder dgl. gebildet sind. Alternativ können die zwei voneinander abgewandten Arretier-Vorsprünge eines endseitigen Kettenglieds einteilig mit dem Körper des Kettenglieds hergestellt sein.

Bevorzugt sind die Endglieder und Kettenglied-Halteelemente so ausgeführt, dass die Arretier-Vorsprünge formschlüssig und/oder werkzeugfrei lösbar in den Halte-Vertiefungen gehalten sind.

Weiterhin wird auch eine entsprechend verbesserte Stützkette nach dem Oberbegriff aus Anspruch 8 vorgeschlagen. Diese zeichnet sich nach dem ersten Aspekt in entsprechender Weise dadurch aus, dass die Stützkette zwei endseitige Kettenglieder aufweist, die beide jeweils zwei voneinander abgewandte Arretier-Vorsprünge umfassen, welche insbesondere zusätzlich zu den ersten und zweiten Gelenkelemente vorgesehen sind, und jeweils in Richtung im Wesentlichen parallel zur Querrichtung vorstehen, insbesondere über die ersten und zweiten Gelenkelemente hinaus seitlich an einer der äußeren Seitenflächen. Weiterhin zeichnen sich die beiden endseitigen Kettengliedern dadurch aus, dass an jedem Endglied die Arretier-Vorsprünge zum Arretieren der Stützkette in Längsrichtung durch Zusammenwirken mit entsprechenden Halte-Vertiefungen einer Endbefestigung vorgesehen sind. Hierbei können an mindestens einem, vorzugsweise an beiden endseitigen Kettenglied(ern), die Arretier-Vorsprünge am mittleren Bereich, insbesondere an einem Rumpfbereich, vorgesehen sein.

### ZWEITER ASPEKT

Zur Lösung der zweiten Aufgabe wird nach einem zweiten, unabhängigen Aspekt eine verbesserte Klemmplatte nach Anspruch 10 vorgeschlagen. Diese Klemmplatte hat zwei kurze Schmalseiten parallel zu einer Längsrichtung, die einer Längsrichtung einer festzulegenden Stützkette entspricht, und zwei lange Hauptseiten bzw. Stirnseiten parallel zu einer Querrichtung, sowie zwei abgewandte Hauptflächen parallel zu einer Hauptebene.

Gemäß dem zweiten Aspekt ist die Klemmplatte dadurch gekennzeichnet, dass an jeder Hauptseite bzw. Stirnseite eine in Längsrichtung offene stirnseitige Haltenut vorgesehen ist, welche mit durchgehend gleichem Querschnitt von der einen zur anderen Schmalseite verläuft und dort in Querrichtung offen mündet, sodass insbesondere Halteelemente, z.B. für Enden von zu führenden Leitungen oder für endseitige Kettenglieder, mittels in beide Haltenuten eingreifender Zungen in Querrichtung einschiebbar und verschiebbar an der Klemmplatte montierbar sind.

Die Klemmplatte kann plattenartig, insbesondere mit einer rechteckigen Grundfläche, und vorzugsweise mit ebenen, flächigen Hauptflächen ausgeführt sein.

Diese flache Bauweise reduziert den nötigen Materialaufwand und ermöglicht, baugleiche Klemmplatten mit modularen Spezialverbindern für unterschiedliche Bauhöhen einzuklemmender Umhüllungen, d.h. mit unterschiedlichen Leitungsdurchmessern zu nutzen. Die Klemmplatte kann aus einem Metallprofil, insbesondere Extrusionsprofil, z.B. aus Aluminium, das bereits die Haltenuten aufweist zugeschnitten werden und ist kostengünstig herstellbar.

Die Klemmplatte kann zur vereinfachten Handhabung bezüglich mindestens zwei von drei Mittelebenen spiegelsymmetrisch ausgeführt sein. Als Mittelebenen sind hierbei bezeichnet: die Mittelebene parallel zur Hauptebene, die Mittelebene senkrecht zur Hauptebene entlang der Längsrichtung und die Mittelebene senkrecht zur Hauptebene entlang der Querrichtung.

Die Klemmplatte kann bezüglich allen drei Mittelebenen im Wesentlichen spiegelsymmetrisch ausgeführt ist.

Bevorzugt hat die Klemmplatte beidseitig an den Schmalseiten jeweils mindestens zwei, vorzugsweise drei, Befestigungslöcher. Diese sind bevorzugt entlang der Längsrichtung und nahe den Schmalseiten angeordnet.

Ferner betrifft die Erfindung einen Bausatz, umfassend zwei Klemmplatten sowie mindestens vier Verlängerungsschrauben, mit je einem Außengewinde sowie einem Innengewinde am Schraubenkopf passend zum Außengewinde, sowie entsprechende Innengewinde-Buchsen passend zum Außengewinde. Ein Vorteil hierbei ist, dass die Endbefestigung Lagenweise montiert und demontiert werden kann, was insbesondere beim Austausch nur einer von mehreren Umhüllungen die Handhabung sehr vereinfacht.

In Verbindung mit einer Schraubverbindung kann jede Klemmplatte an mindestens zwei Befestigungslöchern jeder Schmalseite, jeweils beidseitig gegenüberliegend am Befestigungsloch Senkungen aufweisen. Je nach gewählter Schraube bzw. Buchse kann insbesondere eine konische Senkung zur Aufnahme eines Schraubenkopfes und eine zylindrische Senkung zum Einpressen einer Innengewinde-Buchse vorgesehen sein, d.h. nur insoweit ist die Klemmplatte vorzugsweise mit ihren Befestigungslöchern nicht symmetrisch zur Mittelebene parallel zur Hauptebene, ansonsten jedoch vorzugsweise bezüglich allen drei Mittelebenen spiegelsymmetrisch.

Bevorzug sind im Bausatz bzw. System Verlängerungsschrauben unterschiedlicher Länge vorgesehen, insbesondere in drei oder mehr unterschiedlichen Längen. So kann durch passende Auswahl der Schrauben die Auswahl der nutzbaren Höhe zwischen zwei Klemmplatten erfolgen.

Die beiden Aspekte sind besonders vorteilhaft miteinander kombinierbar, d.h. eine Endbefestigungsvorrichtung hat vorzugweise Endglieder der Stützkette und/oder Kettenglied-Halteelemente nach dem ersten Aspekt und auch eine Klemmplatte nach dem zweiten Aspekt.

Alle vorstehend beschriebenen Merkmale der einzelnen Bauteile, sind auch vorteilhaft im Baukasten bzw. Bausatz kombiniert anwendbar.

Weitere Einzelheiten und Vorteile der Erfindung lassen sich, ohne Beschränkung der Allgemeinheit des Vorstehenden, der nachfolgenden Erläuterung bevorzugter Ausführungsbeispiele anhand der beigefügten Zeichnungen entnehmen. Merkmale mit entsprechender bzw. identischer Struktur oder Funktion haben entsprechende Bezugszeichen und werden ggf. nicht wiederholt beschrieben.

Hierbei zeigen:
- FIG.1A-1B:: eine schematische Darstellung einer gattungsgemäßen Leitungsführungseinrichtung in perspektivischer Ansicht (FIG.1A) und in einem Querschnitt quer zur Längsrichtung (FIG.1B) gemäß dem Stand der Technik z.B. aus DE 20 2019 103 276 U1;
- FIG.2A-2C: ein erstes Ausführungsbeispiel einer Endbefestigung für eine Leitungsführungseinrichtung gemäß FIG.1A-1B in Perspektivansicht montiert (FIG.2A) und in Explosionsdarstellung (FIG.2B) und in Seitenansicht (FIG.2C);
- FIG.2D: eine Variante einer Endbefestigung nach FIG.2A-2B in Perspektivansicht mit anderen Zugentlastungselementen;
- FIG.3A-3C:: Ansichten einer Klemmplatte, in Draufsicht (FIG.3A), in Seitenansicht (FIG.3B) und im Querschnitt (FIG.3C: gemäß Schnittlinie M-M aus FIG.3A)
- FIG.4A-4D:: Ansichten eines Bausatzes mit mehreren Klemmplatten nach FIG.3A-3C, in einem montierten Beispiel (FIG.4A-4B), ohne befüllte Umhüllung, sowie speziellen Verlängerungsschrauben (FIG.4C) und Gewindebuchsen (FIG.4B), für eine Endbefestigung nach FIG.2;
- FIG.5A-5C:: perspektivische, z.T. aufgebrochene Explosionsansichten eines Ausführungsbeispiels einer verbesserten Endbefestigung mit Ausführungsbeispielen von Endgliedern der Stützkette, in Gesamtansicht mit Umhüllung und Stützkette an einem Ende (FIG.5A) sowie Teilansichten beider Enden, mit jeweils einem von zwei zu befestigenden Endgliedern der Stützkette (FIG.5B/FIG.5B);
- FIG.6A-6D:: beide Endglieder aus FIG.5B-5C, jeweils in Draufsicht und in einem Längsschnitt (horizontal); und
- FIG.7A-7D:: ein Ausführungsbeispiel eines Kettenglied-Halteelements, das als Gleichteil in beiden Endbefestigungen aus FIG.5A-5C oder auch FIG.1-2 bzw. FIG.4 verwendbar ist.

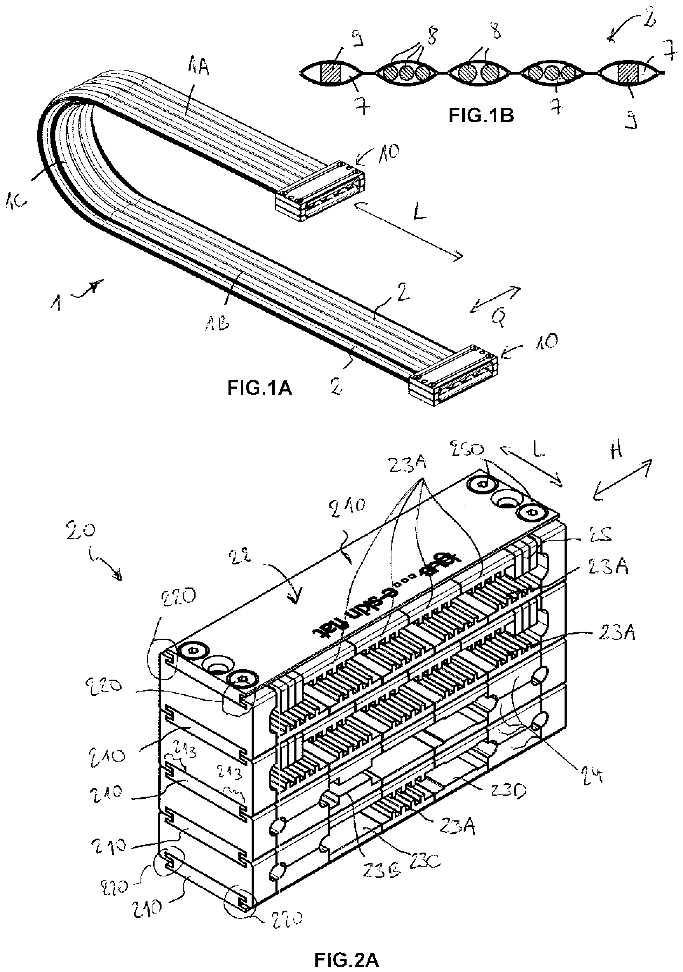

FIG.1A-1B zeigen ein Ausführungsbeispiel einer dynamischen d.h. hin und her verfahrbaren Leitungsführungseinrichtung 1 für Versorgungsleitungen 8, z.B. für die Strom- und Datenversorgung in einer Maschine. Die Leitungsführungseinrichtung 1 ist linear verfahrbar und bildet dabei ein bewegliches Obertrum 1A, ein ruhendes Untertrum 1B und dazwischen einen mitfahrenden Umlenkbogen 1C. Das Obertrum 1A ist in Längsrichtung L der Leitungsführungseinrichtung 1 verfahrbar. Der Umlenkbogen 1C hat einen vorgegebenen Umlenkradius bzw. Biegeradius um eine Querrichtung Q, senkrecht zur Längsrichtung L. Die Leitungsführungseinrichtung 1 umfasst in FIG.1A zwei in die Längsrichtung L langgestreckte flexible Umhüllungen 2 die geschachtelt übereinander liegen. Die Raumlage ist jedoch beliebig, die Leitungsführungseinrichtung 1 kann z.B. auch vertikal verfahren. Jede Umhüllung 2 ist insgesamt schlauchartig und ausreichend flexibel ausgeführt, u.a. durch geeignete Gestaltung und/oder Materialwahl, um eine reversibel biegsame Krümmung des Umlenkbogens 1C mit geringem Kraftaufwand zu erlauben und der Fahrbewegung eines beweglichen Anschlusses bzw. Mitnehmers mit möglichst geringem Widerstand zu folgen.

Jede staubschützende Umhüllung 2 (auch "Pod" genannt) ist insbesondere staubdicht ausgeführt und dient primär dazu, das Austreten von Partikeln, die insbesondere durch Abrieb der Leitungen und/oder Stützkette unvermeidbar entstehen, nach außen zu vermeiden. Die Bauweise der schlauchartigen Umhüllung 2 kann z.B. wie in DE 20 2019 103 276 U1 (dort zu FIG.9-10) beschrieben gewählt sein, deren Lehre insoweit zur Verkürzung hier einbezogen ist. Auch andere schlauchartige Umhüllungen 2, z.B. aus dem einleitend genannten Stand der Technik, sind verwendbar.

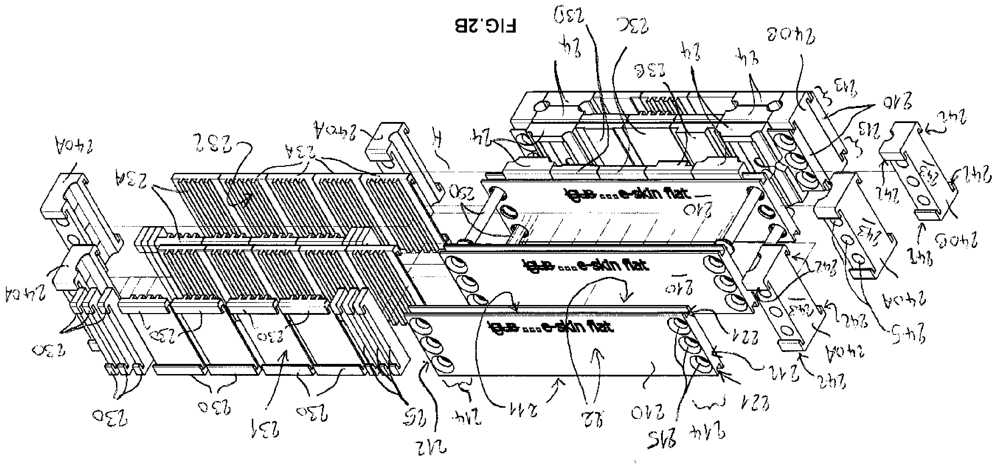

FIG.1A zeigt weiterhin zwei Endbefestigungsvorrichtungen 10, die jeweils an einem Ende der Leitungsführungseinrichtung 1 vorgesehen sind. Die Leitungsführungseinrichtung 1 wird anhand der Endbefestigungsvorrichtungen 10 an jeweils einer von zwei relativ zueinander beweglichen Anschlussstellen, bspw. an einer Maschine oder Anlage (nicht gezeigt), angeschlossen und befestigt. FIG.1A zeigt Endbefestigungsvorrichtungen gemäß DE 20 2019 103 276 U1 (vgl. dort FIG.13A-13D). Bevorzugte, erfindungsgemäße Ausführungsformen der Endbefestigungsvorrichtungen werden weiter unten zu FIG.2-8 erläutert, anstelle derjenigen aus FIG.1A.

FIG.1B zeigt rein beispielhaft eine mögliche Innenaufteilung zu einer der beiden Umhüllungen 2 in einem Querschnitt senkrecht zur Längsrichtung L. Die Umhüllung 2 kann z.B. einer Mehrzahl einzelner aus Kunststoff hergestellter Hülleinheiten zusammengesetzt sein (nicht gezeigt) oder einen einteiligen Schlauch mit mehreren Kanälen als Aufnahmen 7 bilden. In FIG. 1B hat die Umhüllung 2 beispielhaft fünf kanalartige Aufnahmen 7 für eine oder mehrere Versorgungsleitungen 8 bzw. Leitungsbündel sowie zwei Stützketten 9 in den äußeren Aufnahmen, welche den Radius des Umlenkbogens 1C vorgeben und eine freitragende Länge des ausgefahrenen Obertrums 1A stützen. Die Umhüllung 2 ist aus einem biegsamen weichelastischen Kunststoff, insbesondere einem Thermoplast, z.B. PE, PU, TPU, PTFE, expandiertes PTFE, PP oder dgl., hergestellt und hat über ihre Länge einen durchgehend gleichbleibenden Querschnitt senkrecht zur Längsrichtung L. Die Umhüllung 2 kann preiswert als Strangware in geeigneter Kunststoff-Extrusionstechnik hergestellt und auf eine geeignete Länge, z.B. von ca. 100mmm bis ca. 1500mm, abgelängt werden. Alle Aufnahmen 7 innerhalb der Umhüllung 2 sind räumlich voneinander getrennt und liegen in Querrichtung Q nebeneinander. Die Umhüllung 2 umgibt die Leitungen 8 bzw. Stützketten 9 über die Längserstreckung staubdicht und vermeidet somit das Austreten von Partikeln, die bspw. durch Abrieb oder Abnutzung entstehen.

FIG.2A-2B zeigen ein besonders bevorzugtes Beispiel einer erfindungsgemäßen Endbefestigungsvorrichtung 20. Die Endbefestigungsvorrichtung 20 ist an beiden Enden der Leitungsführungseinrichtung 1 verwendbar. Sie hat eine Anzahl baugleicher Klemmplatten 210, die in FIG.2A-2D als im Wesentlichen flache rechteckige Platten aus Metall, z.B. aus einem Aluminium-Extrusionsprofil hergestellt sind. Die Klemmplatten 210 bilden an jeder Seite eine Hauptfläche 22 zum Ausüben einer Klemmkraft und sind mit ihrer Hauptrichtung H, die der Längserstreckung der Klemmplatte 210 entspricht, senkrecht zur Längsrichtung L der Umhüllung 2 (vgl. FIG.1A) angeordnet. Alle Klemmplatten 210 sind baugleich und haben zwei lange Stirnseiten 211 in der Hauptrichtung H, quer zu welchen die Leitungen 8 durchgeführt werden, und zwei kurze Schmalseiten 212.

Die Endbefestigungsvorrichtung 20 in FIG.2A-2D ist mehrlagig aufgebaut, für mehrere Umhüllungen 2 übereinander, und umfasst in jeder Lage eine Anzahl modularer Zugentlastungselemente 23A, 23B, 23C, 23D usw. unterschiedlicher Bauart. In jeder von hier beispielhaft vier Lagen liegen sich jeweils paarweise identische Zugentlastungselemente 23A, 23B, 23C bzw. 23D zwischen zwei Klemmplatten 210 gegenüber. Die Zugentlastungselemente 23A, 23B, 23C, 23D haben jeweils eine Klemmfläche 232 zum kraftschlüssigen Halten einer oder mehrerer Leitungen 8 (vgl. FIG.1B) in der jeweiligen kanalartigen Aufnahme 7 mitsamt der Umhüllung 2. Die Zugentlastungselemente 23A, 23B, 23C, 23D sind modular und zur aneinander gereihten und gegenüberliegenden Anordnung zwischen zugewandten Hauptflächen 22 der Klemmplatten 210 gestaltet.

Wie am besten aus der Seitenansicht FIG.2C ersichtlich, hat jede der baugleichen Klemmplatten 210 jeweils einen Haltebereich 213, u.a. für Zugentlastungselemente 23A, 23B, 23C, 23D usw., welcher diese gegen Verschiebung in Längsrichtung L an der jeweiligen Klemmplatte 210 hält. Wie am besten aus FIG.2B-2C ersichtlich haben die Klemmplatten 210 dazu jeweils an ihren langen Stirnseiten 211 ausgeprägte, voneinander abgewandte Haltebereiche 213 mit einem hier stirnseitigen Profilquerschnitt 220 mit jeweils einer Hinterschneidung im Querschnitt bzw. Seitenansicht betrachtet, wobei die Hinterschneidung in FIG.2A-2D durch eine etwa U-förmige bzw. in Hauptrichtung durchgehend gleichbleibende Haltenut 221 bzw. Vertiefung an den Stirnseiten 211 ausgeführt ist. Die Haltenut 221 ist hier zu beiden Mittelebenen senkrecht und parallel zu den Hauptflächen 22 jeweils spiegelsymmetrisch ausgeführt und hat einen gerundeten rechteckigen Querschnitt, mit etwa der halben Bauhöhe der Klemmplatte 210.

Die verschiedenen Zugentlastungselemente 23A, 23B, 23C, 23D usw. haben jeweils zwei Verbindungsbereiche 230, hier mit klauenförmigem Querschnitt zur Hauptrichtung H, welcher zum formschlüssigen Hintergreifen der Hinterschneidung bzw. Haltenut 221 im Profilquerschnitt 220 des Haltebereichs 213 der Klemmplatte 210, gestaltet ist, d.h. zum Eingreifen in die stirnseitige Haltenut 221 wie aus FIG.2A-2D ersichtlich. Die Verbindungsbereiche 230 sind jeweils an beiden Stirnseiten als baugleiche, spiegelsymmetrische Klauen ausgeführt, wobei jede Klaue eines Verbindungsbereichs 230 nicht ganz die Hälfte der freien Höhe der stirnseitigen Haltenut 221 einnimmt, sodass beidseitig an jeder Klemmplatte 210 jeweils Zugentlastungselemente 23A, 23B, 23C, 23D mit entsprechenden Verbindungsbereichen 230 in den Profilquerschnitt 220 des Haltebereichs 213 eingreifen können, vgl. FIG.2C.

Zwischen den gegenüberliegenden Verbindungsbereichen 230 ist an der Rückseite der Zugentlastungselemente 23A, 23B, 23C, 23D eine Aufnahme 231 ausgebildet, welche den Querschnitt der jeweils zugeordneten Klemmplatte 210 etwa hälftig aufnimmt. So kann ein und dieselbe Klemmplatte 210 für zwei aufeinanderfolgende Lagen von Umhüllungen 2 genutzt werden, wie die drei in Höhenrichtung innenliegenden Klemmplatten 210 in FIG.2A veranschaulichen. Die Zugentlastungselemente 23A, 23B, 23C, 23D haben unterschiedliche Klemmflächen und eine im Wesentlichen identische Grundfläche zur modularen Verwendung. Die Zugentlastungselemente 23A, 23B, 23C, 23D können aus demselben weichelastischen und abriebarmen Kunststoff wie die Umhüllungen 2 hergestellt sein (s. oben).

Durch die Gestaltung der Verbindungsbereiche 230 welche formschlüssig in die Hinterschneidung(en) der Klemmplatten 210 eingreifen, sind die Zugentlastungselemente 23A, 23B, 23C, 23D nicht nur in Längsrichtung L, sondern auch in Richtung senkrecht zur Hauptfläche 22 an der jeweiligen Klemmplatte 210 verliersicher gehalten werden.

In FIG.2A-2D sind weiterhin besondere Befestigungselemente 24 für Stützketten 9 gezeigt, welche die Stützketten 9 in Längsrichtung L an der Endbefestigungsvorrichtung 20 sichern. Die Befestigungselemente 24 haben an ihren Rückseiten baugleiche Verbindungsbereiche 230 und Aufnahmen 231 (nicht bezeichnet). Entsprechendes gilt auch für zusätzliche Abstandhalter 25 in den oberen beiden Lagen aus FIG.2A-2D. Diese Abstandhalter 25 erlauben einen seitlichen Versatz in Querrichtung Q zwischen den gegenüberliegen Zugentlastungselementen 23A, sodass in den beiden oberen Lagen jeweils zwei aufeinander liegende Umhüllungen, wie in FIG.1A gezeigt, gemeinsam zwischen zwei Klemmplatten 210 festgelegt werden können. Die Abstandhalter 25 haben, wie die Befestigungselemente 24, ebenfalls im Querschnitt zu den Verbindungsbereiche 230 identische Klauen zur Halterung an den Klemmplatten 210. Die Befestigungselemente 24 und Abstandhalter 25 sind damit ebenfalls in Längsrichtung L und senkrecht zu den Hauptflächen 22 sicher an den Klemmplatten 210 gehalten und fixierbar.

Wie FIG.2A-2D weiter zeigen mündet der Profilquerschnitt 220 beidseitig an den kurzen Schmalseiten 212 nach Außen d.h. seitlich offen zugänglich. Der Profilquerschnitt 220 ist über die gesamte Länge in Hauptrichtung H bzw. zwischen den Schmalseiten 212, durchgehend gleichbleibend. Hierdurch können Zugentlastungselemente 23A, 23B, 23C, 23D, Befestigungselemente 24 und Abstandhalter 25 wahlweise modular bzw. nach Bedarf an den Klemmplatten angebracht und an jeder Position positioniert werden durch Einschieben entlang der Hauptrichtung H.

FIG.2B veranschaulicht zudem beispielhaft verzahnte Klemmflächen 232 zum kraftschlüssigen Halten der Leitungen 8 mit der Umhüllung 2 an den Zugentlastungselemente 23A (in den oberen Lagen). Hierbei haben die Klemmflächen 232 in Längsrichtung L erstreckte alternierend zwischen Vertiefungen vorstehende Zahnleisten bzw. Kammzinken, welche eine gewisse Verformbarkeit zur Anpassung an verschiedene Durchmesser der Leitungen 8 erlauben und zugleich einen guten Reibschluss erzielen. Beispielhaft sei nur die Klemmfläche 232 der kurz beschrieben. Auch flächige Gestaltungen sind möglich, wie etwa bei den Zugentlastungselemente 23B, 23C, 23D welche sich vor allem durch unterschiedliche Bauhöhen bzw. - tiefen der jeweiligen Klemmflächen unterscheiden. Weiterhin sind auch Zugentlastungselemente 23E, 23F, 23G mit konkaven oder konkav/konvexen Klemmflächen, wie in der Variante von FIG.2D dargestellt verwendbar. Auch diese Zugentlastungselemente 23E, 23F, 23G haben Verbindungsbereiche 230, die mit den Haltebereichen 213 zusammenwirken. Die Endbefestigungsvorrichtung 20' in der Variante aus FIG.2D unterscheidet sich im Wesentlichen durch diese anders geformten Zugentlastungselemente 23E, 23F, 23G.

Wie FIG.2A-2D weiter zeigen hat die Endbefestigungsvorrichtung 20 gemäß einem weiteren Aspekt jeweils zwischen seitlichen Endbereichen 214 der Klemmplatten 210 zwei als separate Bauteile vorgesehene Plattenverbinder 240A; 240B, um jeweils zwei Klemmplatten 210 paarweise an jeweils einem von beiden seitlichen Endbereichen 214 zu greifen und zu verbinden. Hierzu hat jeder Plattenverbinder 240A, 240B zwei gegenüberliegende Klammerbereiche 242, die gemäß FIG.2A-2D in ihrer Bauweise den klauenartigen Verbindungsbereichen 230 der Zugentlastungselemente 23A... 23G entsprechen, d.h. zwei einander zugewandte stirnseitige Klauen aufweisen. Die Plattenverbinder 240A, 240B haben jedoch jeweils an ihrer Ober- und Unterseite jeweils einen entsprechenden Klammerbereich 242 zur Verbindung mit zwei Klemmplatten 210. Durch die Plattenverbinder 240A, 240B werden die Klemmplatten 210 jeweils paarweise miteinander verbunden und parallel in vorbestimmten Abstand aneinander gehalten. Hierzu greifen die gegenüberliegenden Klammerbereiche 242 jeweils paarweise zumindest formschlüssig in die stirnseitige Haltenut 221 der Klemmplatten 210, analog zu den Verbindungsbereichen 230 (vgl. FIG.2C). Im Beispiel aus FIG.2A-2D sind zwei Typen Plattenverbinder 240A; 240B gezeigt, die sich lediglich durch unterschiedliche Bauhöhe unterscheiden, sodass durch Auswahl der Plattenverbinder 240A; 240B der Freiraum zwischen den paarweise gegenüberliegenden Zugentlastungselementen 23A... 23G eingestellt werden kann. Zwischen zwei Klemmplatten 210 werden jeweils an beiden Endbereichen 214 baugleiche Plattenverbinder 240A bzw. 240B eingesetzt. Diese sind ebenfalls seitlich in der Hauptrichtung H einschiebbar und wieder lösbar. Die Plattenverbinder 240A, 240B haben einen blockförmigen Stützkörper 243, hier aus Vollmaterial insbesondere einem formfesten, unelastischen Kunststoff wie z.B. einem faserverstärkten Polyamid. Der Stützkörper 243 einen vertikalen Abstandhalter zu Vorgabe des vertikalen Abstands zwischen den Klemmplatten 210. Die Plattenverbinder 240A, 240B unterscheiden sich insbesondere durch die Bauhöhe des Stützkörpers 243 und haben ansonsten identische Bauweise, insbesondere ihrer vertikal und horizontal spiegelsymmetrischen Klammerbereiche 242. Die Plattenverbinder 240A, 240B können einseitig eine konkave Aussparung zum Aufnahmeraum für die Umhüllungen aufweisen.

Die Plattenverbinder 240A, 240B haben jeweils identisch angeordnet in ihren Stützkörpern 243 drei in Längsrichtung L verteilte Durchgangslöcher 245 für Schraubverbindungen durch Schrauben 250. Die Durchgangslöcher 245 sind passend zur fluchtenden Anordnung mit entsprechenden Durchgangslöchern bzw. Befestigungslöchern 215 für die Schrauben 250 in den Klemmplatten 210 angeordnet. Die beiden äußeren Schrauben 250 in den Endbereichen 214 können zur seitlichen Sicherung der fertig montierten Endbefestigungsvorrichtung 20; 20' genutzt werden, wie in FIG.2A/2D zu sehen. Hierzu kann in der unteren Klemmplatte 210 unterseitig jeweils in den entsprechenden Befestigungslöchern 215 eine Gewindebuchse eingeschlagen sein, oder eine Schraubenmutter verwendet werden. Die mittleren Befestigungslöchern 215, 245 können zur Befestigung der Endbefestigungsvorrichtung 20; 20' an der Anschlussstelle, d.h. am Festpunkt oder Mitnehmer genutzt werden (nicht gezeigt).

Wie aus FIG.2A-2D weiter ersichtlich dienen die Verbindungsbereiche 230 der Zugentlastungselementen 23A... 23G und auch der Befestigungselemente 24 und Abstandhalter 25 zugleich als Kantenschutz an den Stirnseiten 211 der Klemmplatten 210, sodass die Leitungen 8 nicht in Kontakt mit den Stirnseiten 211 der Klemmplatten 210 geraten können.

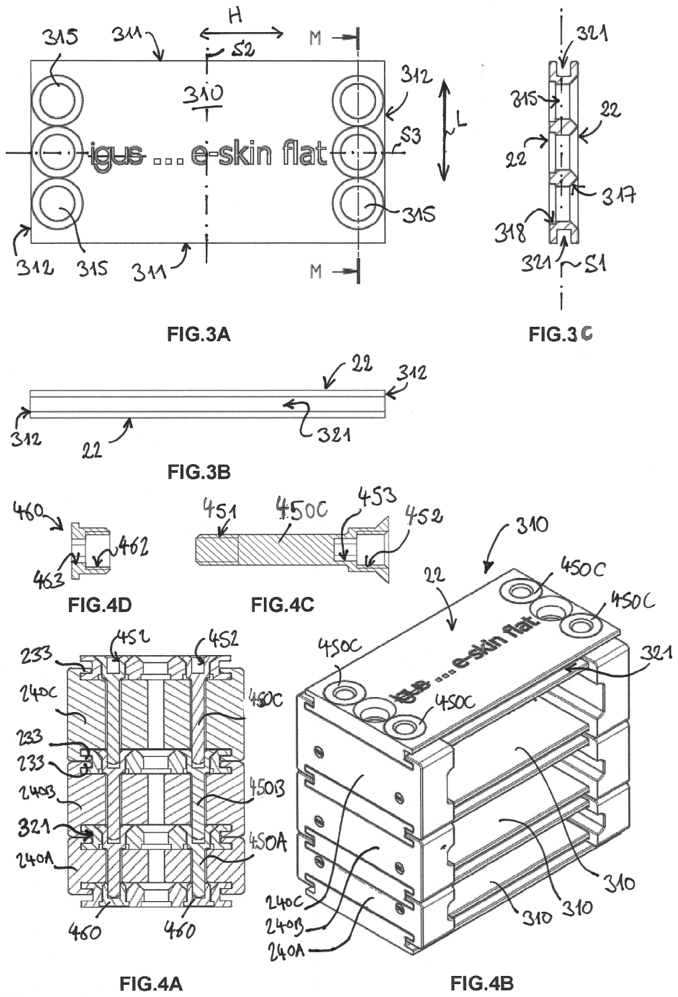

FIG.3A-3C zeigen eine bevorzugte Bauweise der Klemmplatten 310 in für sich genommen in näheren Details. Die Klemmplatten 310 entsprechend denen aus FIG.2A-2D und sind als flache rechteckige Platten aus Metall, z.B. aus einem Aluminium-Extrusionsprofil auf die gewünschte Länge zugeschnitten (FIG.3A-3C zeigen nur rein Beispielhaft eine kürzere Bauform).

Die Klemmplatten 310 bilden an jeder Hauptseite eine von zwei einander abgewandten großen Hauptflächen 22 und werden mit ihrer Hauptrichtung H, die der Längserstreckung der Klemmplatte 310 entspricht, senkrecht zur Längsrichtung L der Umhüllung 2 (vgl. FIG.1A) bzw. Stützkette angeordnet. Vorzugsweise sind alle Klemmplatten 310 derselben Endbefestigungsvorrichtung baugleich (vgl. FIG.4B) und haben zwei lange Stirnseiten 311 in der Hauptrichtung H, quer zu welchen die Leitungen 8 durchgeführt werden, und zwei kurze Schmalseiten 312, welche parallel zur Längsrichtung L angeordnet werden. Wie FIG.3A-3B zeigen ist die Klemmplatte 310 mit einer rechteckigen Grundfläche und mit ebenen, flächigen Hauptflächen ausgeführt, und hat somit eine platzsparende Bauweise, u.a. bei der Lagerung und beim Transport.

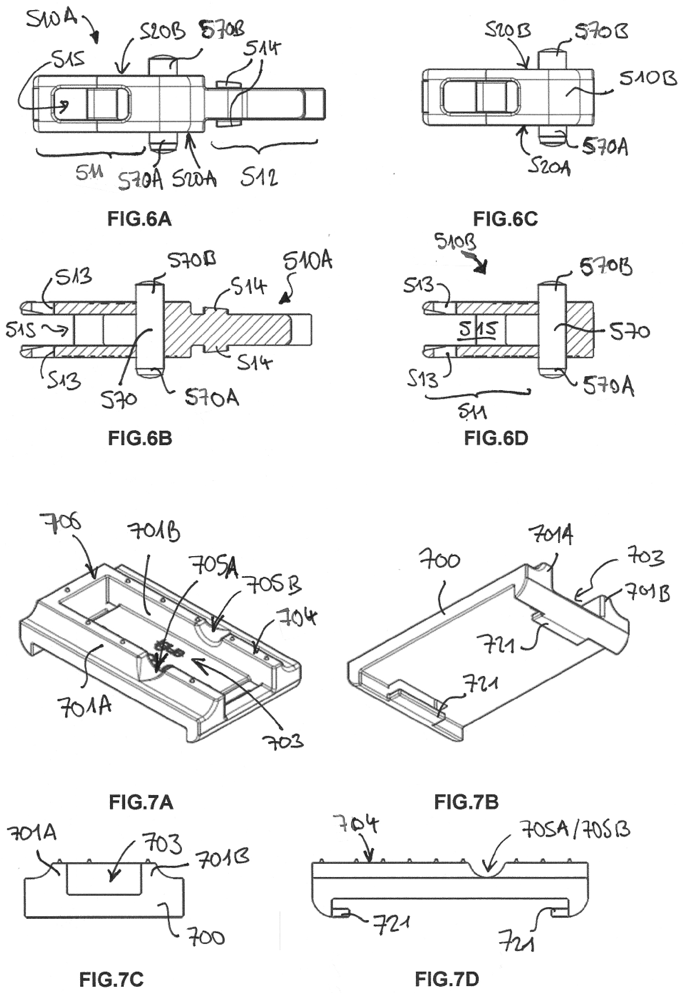

Wie FIG.3A-3C deutlicher zeigen, hat die Klemmplatte 310 hat, wie auch in FIG.2A-2D an jeder langen Stirnseite 311 in Längsrichtung offene bzw. zugängliche stirnseitige Haltenut 321. Wie aus FIG.3B-3C ersichtlich haben beide Haltenuten 321 einen durchgehend gleichbleibenden, hier etwa viereckigen Querschnitt von der einen Schmalseite 312 zur anderen Schmalseite 312. Beide Haltenuten 321 öffnen in Querrichtung offen an den Schmalseiten 312. So können von beiden Seiten Halteelemente, z.B. Zugentlastungselemente 23A, 23B, 23C, 23D für Enden von Leitungen, Plattenverbinder 240A, 240B, oder Halteelemente für endseitige Kettenglieder (vgl. FIG.7A-7D), eingeschoben werden. Solche Halteelemente sind dann mittels entsprechender in beide Haltenuten 321 eingreifender Zungen 233, z.B. baugleiche, spiegelsymmetrische Klauen eines Verbindungsbereichs 230 wie oben beschrieben, an der Klemmplatte 310 montierbar. Dabei sind die montierten Halteelemente sowohl in Längsrichtung L als auch senkrecht zu den Hauptflächen 22 an der Klemmplatte 310 formschlüssig gehalten, sodass diese zusammen mit der Klemmplatte abnehmbar bzw. wieder montierbar sind. Zudem sind die Halteelemente in der Hauptrichtung H frei an der Klemmplatte 310 verschiebbar gehalten.

Entlang der Längsrichtung L sind nahe den Schmalseiten 312 jeweils beidseitig drei Befestigungslöcher 315 vorgesehen, als Durchgangsbohrungen für Schrauben (vgl. FIG.4A).

Die Klemmplatte 310 ist, funktional irrelevante Merkmale wie Beschriftung oder dgl. ausgenommen, zu ihren drei Hauptebenen im Wesentlichen spiegelsymmetrisch, wobei lediglich die Befestigungslöcher 315 nicht spiegelsymmetrisch zur Mittelebene S1 ausgeführt sind, welche parallel zur Hauptebene (aufgespannt durch die Richtungen L und Q) bzw. den ebenen Hauptflächen 22 liegt.

Die Klemmplatte 310 ist spiegelsymmetrisch bezüglich einer Mittelebene senkrecht zur Hauptebene entlang der Querrichtung S2 und spiegelsymmetrisch bezüglich einer Mittelebene S3 senkrecht zur Hauptebene entlang der Längsrichtung, sodass diese auch um 180° gedreht verwendbar ist.

FIG.4A-4B zeigen drei verschiedene Plattenverbinder 240A, 240B, 240C, die sich durch ihre Bauhöhe unterscheiden und im Übrigen der Beschreibung zu FIG.2A-2D entsprechen. Die Plattenverbinder 240A, 240B, 240C verbinden die Klemmplatten 210, 310 im gewünschten Abstand zueinander parallel miteinander.

Bevorzugt hat der Bausatz für eine Endbefestigung, wie FIG.4A-4B zeigen, nebst einer Anzahl Klemmplatten jeweils mindestens vier Verlängerungsschrauben 450C an jeder Ecke der Klemmplatten 310.

FIG.4A zeigt drei Verlängerungsschrauben 450A, 450B, 450C unterschiedlicher Länge zur Auswahl der nutzbaren Höhe zwischen zwei Klemmplatten, passend zur Bauhöhe der Plattenverbinder 240A, 240B, 240C. Eine besonders leicht zu montierende und insbesondere die Wartung erleichternde Bauweise wird erreicht mit Verlängerungsschrauben 450A, 450B, 450C, die FIG.4C beispielhaft für die längste Verlängerungsschraube 450C zeigt. Die Verlängerungsschraube 450A, 450B, 450C sind wahlweise und modular zur axialen Verlängerung miteinander verbindbar und haben hierzu jeweils ein Außengewinde 451 sowie passend dazu am Schraubenkopf ein Innengewinde 452, in welches das Außengewinde 451 einer nächsten Verlängerungsschraube 450A, 450B, 450C einschraubbar ist. So können die einzelnen Lagen bzw. Umhüllungen 2 mit ihren Leitungen jeweils einzeln demontiert werden, ohne dass dabei auch alle unteren Lagen gelöst werden müssen. Dies vereinfacht die Wartung erheblich. Weiterhin können Endbefestigungen auf diese Art leicht und modular um eine Lage erweitert oder auch reduziert werden, ohne alle Klemmplatten 310 zu lösen.

An der untersten Klemmplatte 310, vgl. FIG.4A, sind Innengewinde-Buchsen 460, mit Innengewinde 462 passend zum Außengewinde 451 der Verlängerungsschrauben 450A, 450B, 450C vorgesehen, vorzugsweise eingepresst. Die Innengewinde-Buchsen 460 haben, wie FIG.4D zeigt, Zum Befestigen bzw. Lösen der Schraubverbindung haben die Verlängerungsschrauben 450A, 450B, 450C am Schraubenkopf, vorzugsweise in Verlängerung zum Innengewinde 452 axial vertieft, einen innenliegenden Innensechskant 453 für ein entsprechendes Werkzeug.

Die Klemmplatte 310 hat zum Versenken der Köpfe der Verlängerungsschrauben 450A, 450B, 450C an zumindest den zwei eckseitigen Befestigungslöchern 315 beidseitig gegenüberliegend eine konische Senkung 317 zur Aufnahme eines Schraubenkopfes und eine zylindrische Senkung 318 zum Aufnehmen des Kopfes bzw. Randes einer Innengewinde-Buchse 460, sodass Verlängerungsschrauben 450A, 450B, 450C und Innengewinde-Buchse 460 von den Hauptflächen nicht vorstehen.

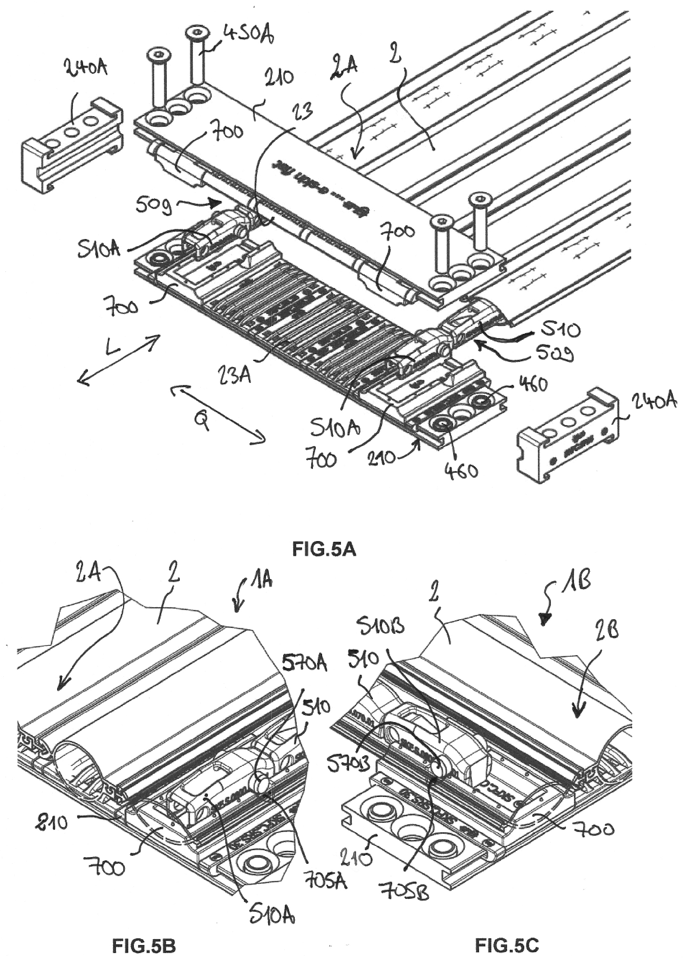

FIG.5A-5C zeigen eine rein beispielhaft konfigurierte Lage bzw. Ebene einer Endbefestigungsvorrichtung mit zwei Klemmplatten 210 nach FIG.2A-2D, z.B. mit Zugentlastungselementen 23A und Plattenverbinder 240A, bzw. den Merkmalen aus FIG.3A-3C. Nachfolgend wird ein weiterer, von den vorstehenden Merkmalen unabhängiger Erfindungsaspekt anhand der FIG.5-7 erläutert, wobei die sonstigen Merkmale denjenigen aus FIG.1A-1B und FIG.2A-2D entsprechen.

Die Lösung betrifft die Endbefestigung der Stützketten 509 bzw. deren Sicherung in Längsrichtung L an der Endbefestigungsvorrichtung 500, wobei hier beispielhaft zwei Stützketten 509 in den Aufnahmen seitlich außen in einer Umhüllung 2 dargestellt sind, die Anzahl und Position in Querrichtung H bzw. Q (FIG.1A-1B) jedoch anwendungsabhängig und modular wählbar ist.

Die Stützketten 509 erstrecken sich Längsrichtung L von einem ersten Ende 2A zu einem zweiten Ende 2B der flexiblen Umhüllung 2 um diese mit den darin geführten Leitungen (nicht gezeigt), sowie ggf. eine oder mehrere darüber liegende Lagen mit Trumen, zu stützen und einen vorgegebenen Radius des Umlenkbereichs 1C zu gewährleisten.

Die Stützketten 509 sind mit einer Vielzahl baugleicher Kettengliedern 510 aufgebaut, welche bevorzugt die Bauweise aus DE 20 2019 106 979 U1 bzw. der internationalen Patentanmeldung Nr. PCT/EP2020/085861 haben und hier daher nur kurz beschrieben sind. Jedes Kettenglied hat korrespondierende erste und zweite Gelenkelemente, die zur schwenkbaren Verbindung zweier Kettenglieder in einer Ebene im Wesentlichen senkrecht zur Querrichtung gestaltet sind. Der Körper des Kettenglieds hat hier z.B. in einem ersten Bereich 511 Gelenkaufnahmen 513 die mit Gelenkzapfen 514 eines zweiten Bereichs 512 zusammenwirken. Bei der bevorzugten Bauweise aus DE 20 2019 106 979 U1 wir der zweite Bereich 512 mit den Gelenkzapfen 514 in eine Aufnahme 515 des ersten Bereichs 511 aufgenommen, wobei die Gelenkzapfen 514 in die entsprechenden Gelenkaufnahmen 513 drehbar einrasten und nicht über die Seitenflächen 520A, 520B des Körpers des Kettenglieds vorstehen, vgl. FIG.6A-6B. Die Gelenkverbindung mit Gelenkzapfen 514 und Gelenkaufnahmen 513 erlaubt ein definiertes Verschwenken der Kettenglieder 510 zueinander, wobei der Schwenkwinkel in beide Richtungen begrenzt ist, wie in DE 20 2019 106 979 U1 bzw. PCT/EP2020/085861 beschrieben. Die vorliegende Erfindung ist jedoch auf jegliche anderen vergleichbare Stützketten anwendbar. Die Kettenglieder 510 sind vorzugsweise mit einem einteiligen Körper aus Kunststoff hergestellt, z.B. in Spritzguss-Technik.

Wie FIG.6A-6C am besten zeigen, sind an den beiden endseitigen Kettengliedern bzw. Endgliedern 510A, 510B jeweils zwei voneinander abgewandte Arretier-Vorsprünge 570A, 570B vorgesehen, die jeweils seitlich, in Richtung im Wesentlichen parallel zur Querrichtung Q bzw. H seitlich an der jeweiligen der äußeren Seitenfläche 520A bzw. 520B vorstehen. Die Arretier-Vorsprünge 570A, 570B stehen dabei deutlich über die Gelenkzapfen 514 seitlich hervor, und haben einen deutlich größeren Durchmesser. Die Arretier-Vorsprünge 570A, 570B sind im Beispiel aus FIG.6A-6D durch die Enden eines robusten Metallbolzens 570 gebildet, welcher durch eine nachgearbeitete Queröffnung bzw. Querbohrung in einem mittleren Rumpfbereich 516 der Endglieder 510A, 510B spielfrei eingepresst ist. Als Metallbolzen 570 kann ein geeignetes Standard-Bauteil aus dem Maschinenbau verwendet werden. Alternativ könnten die Arretiervorsprünge auch einteilig mit dem Körper des endseitigen Kettenglieds bzw. Endglieds 510A, 510B hergestellt sein, z.B. anhand einer speziellen Spritzgussform, eine Nacharbeitung mit separaten Bolzen erlaubt jedoch eine Herstellung aller Kettenglieder 510 als Gleichteile. In FIG.6C-6D ist ein verkürztes Endglied 510B gezeigt, dass durch Abtrennen bzw. Abschneiden des zweiten Bereichs 512 eines Kettenglieds 510A nach FIG.6A-6B bereitgestellt wird, was je nach Baulänge der Kettenglieder 510 in Bezug auf die Klemmplatten 210, 310 vorteilhaft sein kann. Auch hierzu, aber insbesondere für eine gute Krafteinleitung, ist es vorteilhaft wenn die Arretier-Vorsprünge 570A, 570B bzw. der Bolzen 570 in einem in Längsrichtung L mittleren Bereich, insbesondere im Rumpf bzw. Vollmaterial des Körpers des Kettenglieds 510A, 510B, zwischen Endbereichen 511, 512 vorgesehen wird.

Zum Arretieren der jeweiligen Stützkette 509 in Längsrichtung L sind an den Klemmplatten 210 jeweils ein Paar baugleicher, gegenüberliegender Kettenglied-Halteelemente 700 vorgesehen, and beiden Endbefestigungsvorrichtungen, vgl. FIG.5B bzw. FIG.5C.

Die Kettenglied-Halteelemente 700 sind in FIG.7A-7D näher gezeigt und haben jeweils zwei seitlich und in Querrichtung gegenüberliegende Halte-Vertiefungen 705A, 705B die als halbzylindrische Mulden ausgeführt sind um jeweils in etwa eine Hälfte des Querschnitts eines der Arretier-Vorsprünge 570A, 570B formschlüssig aufzunehmen. So können zum endseitigen Befestigen der Stützkette 509 anhand ihrer Endglieder 510A, 510B jeweils an beiden Endbefestigungen jeweils paarweise zwei Kettenglied-Halteelemente 700 als Gleichteile genutzt werden, was die Handhabung und u.a. Lagerhaltung vereinfacht und durch höhere Stückzahlen Kosten senkt.

Die beiden seitlichen Arretier-Vorsprünge 570A, 570B an jedem Endglied 510A, 510B greifen zum Arretieren jeweils in die entsprechende Halte-Vertiefung 705A, 705B im zugeordneten Kettenglied-Halteelement eingreifen, zum Arretieren der Stützkette 509 in Längsrichtung L.

Wie in FIG.5A in Explosionsdarstellung ersichtlich ist jedem der endseitigen Kettenglieder 510A, 510B jeweils ein Paar Kettenglied-Halteelemente 700 zugeordnet, die einander zugewandt liegen, und bezüglich eine Ebene parallel zur Hauptfläche 22 der Klemmplatten 210 (parallel zur Längsrichtung L und Querrichtung Q) gegenüberliegend und fluchtend angeordnet sind, um die Kettenglieder 510A, 510B im montierten Zustand dazwischen aufzunehmen und ggf. einzuklemmen. Hierzu hat das Kettenglied-Halteelement 700 jeweils zwei in Längsrichtung verlaufende gegenüberliegenden Seitenwände 701A, 701B und dazwischen, eine zur Hauptebene und in Längsrichtung L offen mündende Aufnahme 703 für ein endseitiges Kettenglied 510A, 510B. Die Seitenwände 701A, 701B haben eine obere Fläche 704 die mit der Montage an der Klemmplatte 210, 310 parallel zur Hauptfläche der Klemmplatte 210, 310 bzw. der Ebene aufgespannt durch Längsrichtung L und Querrichtung Q angeordnet wird.

Die Halte-Vertiefungen 705A, 705B sind jeweils in einer der Seitenwände 701A, 701B vorgesehen und beidseitig, insbesondere zur Aufnahme 703 hin offen, sowie auch zum gegenüberliegenden Halteelement 700 bzw. zur Umhüllung 2 hin an der oberen Fläche 704 offen. So können Kettenglieder 510A, 510B werkzeugfrei eingesetzt und wieder entnommen werden, d.h. die Stützkette kann endseitig an den gegenüberliegenden Klemmplatten 210, 310 werkzeugfrei gelöst und befestigt werden.

Die Aufnahme 703 ist so dimensioniert, dass dies vorzugsweise wenigstens 25% bis zu nahezu 50% der Bauhöhe des endseitigen Kettenglieds 510A, 510B aufnimmt, wie FIG.5B-5C veranschaulichen. Vorzugsweise umgreifen Paare aus gegenüberliegenden Halte-Vertiefungen 705A, 705B jeweils im Wesentlichen vollständig bzw. über nahezu den gesamten Umfang den zusammenwirkenden Arretier-Vorsprung 570A, 570B.

An der oberen Fläche 704 der Seitenwände 701A, 701B haben Greif- bzw. Krallenelemente zur Längssicherung einer die Stützkette 509 umgebenden Umhüllung 2, sodass auch diese bzw. die Aufnahme der Stützkette mit gesichert wird. Vorteilhaft wird die Umhüllung bis endseitig in Anlage mit einer Abschlusswand 706 der Kettenglied-Halteelemente 700 geführt, sodass die entsprechende Aufnahme ohne Zusatzmaßnahme möglichst staubdicht verschlossen wird mit der Montage der Endbefestigung. Vorteilhaft hierbei sind die einfache Geometrie des Kettenglied-Halteelements 700 und der Arretier-Vorsprünge 570A, 570B, ohne besondere Hinterschneidungen und scharfe Kanten, sodass die Umhüllung nicht beschädigt wird bei ihrem Einklemmen zwischen den Kettenglied-Halteelementen 700 zusammen mit dem jeweiligen Endglied 710A, 710B. Das Kettenglied-Halteelemente 700 ist vorzugsweise einteilig aus Kunststoff hergestellt sind, insbesondere als Spritzgussteil.

Das Kettenglied-Halteelement 700 hat an von der Vorderseite mit der Aufnahme 703 abgewandten Rückseite an beiden Längsenden zwei einander zugewandte Zungen bzw. Klauen 721 die zur Verbindung, insbesondere in Art einer Feder-Nut-Verbindung, mit jeweils einer der zwei abgewandten stirnseitigen Haltenuten 221, 312 an einer Klemmplatte 210, 310 der Endbefestigung zusammenwirken. Zur robusten Befestigung der Stützkette 509 ist somit lediglich eine geringfügige Nacharbeitung zur Bereitstellung der Arretier-Vorsprünge 570A, 570B an beiden Endgliedern 710A, 710B sowie ein einziges Gleichteil 700 erforderlich.

Die vorgeschlagene Gestaltung hat weiterhin den besonderen Vorteil, dass die Stützketten 509, welche beim Verfahren Verschleiß unterliegen, ebenso einfach ausgetauscht werden können wie Leitungen, da keine besonderen Befestigungsmittel, wie etwa vertikale Schrauben oder Bolzen durch die Stützketten und die Klemmplatten vorgesehen sind. Das Lösen der beiden Klemmplatten 210, 310 einer Lage löst zugleich auch die Längs-Arretierung bzw. Befestigung der Stützketten, und stellt diese umgekehrt beim Verbinden entsprechend mit her, sodass die Montage und Wartung deutlich vereinfacht werden.

Im Allgemeinen umfasst die vorliegende Anmeldung auch die folgenden Aspekte (ursprünglicher Anspruchsgegenstand der Stammanmeldung EP-Anmeldung Nr. 21728282.1 als enthaltenen Inhalt. Die folgenden Aspekte werden ebenfalls in Kombination mit dem Gegenstand der beigefügten Ansprüche offenbart. Darüber hinaus werden die folgenden Aspekte auch in Kombination mit den Merkmalen mindestens einer der oben beschriebenen Ausführungsformen offenbart, und zwar unabhängig voneinander oder in Kombination miteinander:
1. Leitungsführungsvorrichtung für Leitungen, wie z.B. Kabel, Schläuche oder dgl., insbesondere für eine Reinraumanwendung, umfassend:
   - mindestens eine längliche, flexible Umhüllung, die hin- und hergehend verfahrbar ist, und eine Anzahl von kanalartigen, sich in einer Längsrichtung von einem ersten Ende zu einem zweiten Ende erstreckenden Aufnahmen für Leitungen aufweist, wobei die Aufnahmen in einer Querrichtung seitlich nebeneinanderliegend angeordnet sind, und die Umhüllung hin- und hergehend, insbesondere unter Bildung von zwei Trumen mit einem Umlenkbogens dazwischen verfahrbar ist;
   - mindestens eine Stützkette , vorzugsweise zwei Stützketten , die sich Längsrichtung vom ersten Ende zum zweiten Ende der flexiblen Umhüllung erstreckt um diese zu stützen, und die eine Vielzahl einzelner Kettenglieder umfasst, die gelenkig miteinander verbunden sind, wobei jedes Kettenglied einen Körper mit zwei äußeren Seitenflächen und korrespondierende erste und zweite Gelenkelemente aufweist, die zur schwenkbaren Verbindung zweier Kettenglieder in einer Ebene im Wesentlichen senkrecht zur Querrichtung gestaltet sind;
   - eine erste Endbefestigungsvorrichtung zum Festlegen des ersten Endes der Umhüllung und der Stützkette , und eine zweite Endbefestigungsvorrichtung zum Festlegen des zweiten Endes der Umhüllung und der Stützkette ;
   - wobei jede Endbefestigungsvorrichtung mindestens ein Kettenglied-Halteelement zum Arretieren eines zugeordneten endseitigen Kettenglieds der Stützkette in Längsrichtung , insbesondere zwischen zwei Klemmplatten aufweist; **wobei**
   - die Stützkette zwei endseitige Kettenglieder aufweist, die beide jeweils zwei voneinander abgewandte Arretier-Vorsprünge umfassen, die jeweils in Richtung im Wesentlichen parallel zur Querrichtung über die ersten und zweiten Gelenkelemente hinaus seitlich an einer der äußeren Seitenflächen vorstehen;
   - die Kettenglied-Halteelemente beider Endbefestigungsvorrichtung jeweils zwei seitlich und in Querrichtung gegenüberliegende Halte-Vertiefungen aufweisen; und
   - die Arretier-Vorsprünge beider endseitiger Kettenglieder zum Arretieren jeweils in die Halte-Vertiefungen im zugeordneten Kettenglied-Halteelement eingreifen, zum Arretieren der Stützkette in Längsrichtung.
2. Bausatz mit Stützkette für eine Leitungsführungsvorrichtung nach Aspekt 1, umfassend mindestens eine Stützkette , vorzugsweise zwei Stützketten , die sich Längsrichtung von einem ersten Ende zu einem zweiten Ende erstreckt, und die eine Vielzahl einzelner Kettenglieder umfasst, die gelenkig miteinander verbunden sind, wobei jedes Kettenglied einen Körper mit zwei äußeren Seitenflächen und korrespondierende erste und zweite Gelenkelemente aufweist, die zur schwenkbaren Verbindung zweier Kettenglieder in einer Ebene, die im Wesentlichen senkrecht zu einer Querrichtung der Längsrichtung liegt, gestaltet sind
   zwei Kettenglied-Halteelemente zum Arretieren in Längsrichtung jeweils eines zugeordneten endseitigen Kettenglieds am ersten bzw. zweiten Ende der Stützkette, insbesondere zwischen zwei Klemmplatten ;
   **wobei**
      - die Stützkette zwei endseitige Kettenglieder aufweist, die zum Arretieren in Längsrichtung bestimmt sind und beide jeweils zwei voneinander abgewandte Arretier-Vorsprünge umfassen , die jeweils in Richtung im Wesentlichen parallel zur Querrichtung über die ersten und zweiten Gelenkelemente hinaus seitlich an einer der äußeren Seitenflächen vorstehen und
      - beide Kettenglied-Halteelemente jeweils zwei seitlich und in Querrichtung gegenüberliegende Halte-Vertiefungen aufweisen; und
      - die Arretier-Vorsprünge beider endseitiger Kettenglieder zum Arretieren mit jeweils beiden Halte-Vertiefungen im zugeordneten Kettenglied-Halteelement eingreifend zusammenwirken.
3. Leitungsführungsvorrichtung nach Aspekt 1 bzw. Bausatz nach Aspekt 2, wobei jedem der endseitigen Kettenglieder jeweils ein Paar Kettenglied-Halteelemente zugeordnet sind, die einander zugewandt und bezüglich einer Hauptebene parallel zur Längsrichtung und Querrichtung gegenüberliegend angeordnet bzw. anordenbar sind, und jeweils zwei in Längsrichtung verlaufende gegenüberliegenden Seitenwände aufweisen, wobei jedes Kettenglied-Halteelement eines Paars zwischen den Seitenwänden eine zur Hauptebene und in Längsrichtung offene Aufnahme für ein endseitiges Kettenglied bildet, wobei die Aufnahme vorzugsweise wenigstens 25% bis zu nahezu 50% der Bauhöhe des endseitigen Kettenglieds aufnimmt, wobei in jeder Seitenwand je eine Halte-Vertiefung vorgesehen ist, insbesondere zur Aufnahme und zur Hauptebene hin offen vorgesehen ist, sodass zwei gegenüberliegende Halte-Vertiefungen jeweils einen der Arretier-Vorsprünge beidseitig zumindest teilweise, vorzugsweise im Wesentlichen vollständig umgreifen, wobei alle Kettenglied-Halteelemente vorzugsweise baugleich ausgeführt sind.
4. Vorrichtung bzw. Bausatz nach einem der Aspekte 1 bis 3, wobei die Arretier-Vorsprünge vorzugsweis in einem in Längsrichtung mittleren Bereich des Kettenglieds zwischen Endbereichen mit den korrespondierende ersten und zweiten Gelenkelementen vorgesehen sind.
5. Vorrichtung bzw. Bausatz nach einem der Aspekte 1 bis 4, insbesondere nach Aspekt 3, wobei die in Längsrichtung verlaufenden gegenüberliegenden Seitenwände jedes Kettenglied-Halteelements eine obere Fläche im Wesentlichen parallel zur Hauptebene aufweisen, an welchen Greif- bzw. Krallenelemente zur Längssicherung einer die Stützkette umgebenden Umhüllung vorgesehen sind.
6. Vorrichtung bzw. Bausatz nach einem der Aspekte 1 bis 5, wobei alle Kettenglied-Halteelemente baugleich und einteilig ausgeführt sind und vorzugweise aus Kunststoff hergestellt sind, insbesondere als Spritzgussteile; und/oder die Kettenglied-Halteelemente an einer Vorderseite eine zur Hauptebene und in Längsrichtung offene Aufnahme für ein endseitiges Kettenglied bildet und an einer Rückseite an beiden Längsenden einander zugewandte Zungen aufweist zur Verbindung, insbesondere in Art einer Feder-Nut-Verbindung, mit jeweils einer von zwei abgewandten stirnseitigen Haltenuten an einer Klemmplatte der Endbefestigung.
7. Vorrichtung bzw. Bausatz nach einem der Aspekte 1 bis 6, wobei die Kettenglieder mit einem einteiligen Körper aus Kunststoff hergestellt sind, insbesondere als Spritzgussteile, wobei -die zwei voneinander abgewandten Arretier-Vorsprünge eines endseitigen Kettenglieds durch die Enden eines eine Queröffnung im Kettenglied durchgreifenden und beidseitig seitlich vorstehenden separaten Bolzens, Zapfens oder dgl. gebildet sind; oder
   - die zwei voneinander abgewandten Arretier-Vorsprünge eines endseitigen Kettenglieds einteilig mit dem Körper des Kettenglieds hergestellt sind und beidseitig vorstehen.
8. Vorrichtung bzw. Bausatz nach einem der Aspekte 1 bis 7, wobei die Arretier-Vorsprünge formschlüssig und/oder werkzeugfrei lösbar in den Halte-Vertiefungen gehalten sind.
9. Stützkette für eine Vorrichtung nach einem der Aspekte 1 bis 7, umfassend eine Vielzahl verbundener Kettenglieder, wobei jedes Kettenglied jeweils einen Körper mit einem vorderen ersten Längsabschnitt sowie einen dazu komplementären hinteren zweiten Längsabschnitt umfasst, mit zwei Seitenteilen welche die äußeren Seitenflächen aufweisen und zwischen denen ein Freiraum, vorgesehen ist in welchen der erste Längsabschnitt eines angrenzenden folgenden Kettenglieds einführbar ist, wobei die ersten Gelenkelemente zwei seitliche im Wesentlichen parallel zur Querrichtung am ersten Längsabschnitt vorstehende Gelenkzapfen sind und die zweiten Gelenkelemente zwei korrespondierende Gelenkaufnahmen in den beiden Seitenteilen sind, zur schwenkbaren Aufnahme der Gelenkzapfen eines angrenzenden folgenden Kettenglieds, wobei der Körper einen mittleren Bereich, insbesondere zwischen dem ersten Längsabschnitt und dem Freiraum im zweiten Längsabschnitt , umfasst,
   wobei
   die Stützkette zwei endseitige Kettenglieder aufweist, die beide jeweils zwei voneinander abgewandte Arretier-Vorsprünge umfassen , die jeweils in Richtung im Wesentlichen parallel zur Querrichtung über die ersten und zweiten Gelenkelemente hinaus seitlich an einer der äußeren Seitenflächen vorstehen, wobei an mindestens einem, vorzugsweise an beiden endseitigen Kettenglied, die Arretier-Vorsprünge am mittleren Bereich vorgesehen sind, und an beiden endseitigen Kettengliedern, die Arretier-Vorsprünge zum Arretieren der Stützkette in Längsrichtung durch Zusammenwirken mit entsprechenden Halte-Vertiefungen einer Endbefestigung vorgesehen sind.
10. Klemmplatte einer Endbefestigung für eine flexible Umhüllung mit Leitungen, insbesondere für eine Vorrichtung bzw. einen Bausatz nach einem der Aspekte 1 bis 7, umfassend zwei kurze Schmalseiten parallel zu einer Längsrichtung , die einer Längsrichtung einer festzulegenden Stützkette entspricht, und zwei lange Stirnseiten parallel zu einer Querrichtung , sowie zwei abgewandte Hauptflächen parallel zu einer Hauptebene , wobei
   an jeder Stirnseite eine in Längsrichtung offene stirnseitige Haltenut vorgesehen ist, welche mit durchgehend gleichem Querschnitt von der einen zur anderen Schmalseite verläuft und dort in Querrichtung offen mündet, sodass insbesondere Halteelemente, z.B. für Enden zu führender Leitungen oder für endseitige Kettenglieder, mittels in beide Haltenuten eingreifender Zungen in Querrichtung einschiebbar und verschiebbar an der Klemmplatte montierbar sind.
11. Klemmplatte nach Aspekt 10, wobei die Klemmplatte mit einer rechteckigen Grundfläche und mit ebenen, flächigen Hauptflächen ausgeführt ist.
12. Klemmplatte nach Aspekt 10 oder 11, wobei die Klemmplatte bezüglich mindestens zwei von drei Mittelebenen spiegelsymmetrisch ausgeführt ist, insbesondere bezüglich mindestens drei Mittelebenen im Wesentlichen spiegelsymmetrisch ausgeführt ist, nämlich der Mittelebene parallel zur Hauptebene, der Mittelebene senkrecht zur Hauptebene entlang der Längsrichtung und der Mittelebene senkrecht zur Hauptebene entlang der Querrichtung.
13. Klemmplatte nach Aspekt 10, 11 oder 12, wobei mindestens zwei, vorzugsweise drei, Befestigungslöcher entlang der Längsrichtung und nahe den Schmalseiten angeordnet sind.
14. Bausatz, insbesondere nach Aspekt 2, umfassend zwei Klemmplatten nach Aspekt 10, 11 oder 12 sowie mindestens vier Verlängerungsschrauben, mit je einem Außengewinde sowie einem Innengewinde am Schraubenkopf passend zum Außengewinde, sowie entsprechende Innengewinde-Buchsen passend zum Außengewinde.
15. Bausatz nach Aspekt 14, wobei jede Klemmplatte an mindestens zwei Befestigungslöchern jeder Schmalseite, jeweils beidseitig gegenüberliegend am Befestigungsloch Senkungen aufweist, insbesondere eine konische Senkung zur Aufnahme eines Schraubenkopfes und eine zylindrische Senkung zum Einpressen einer Innengewinde-Buchse.
16. Bausatz nach Aspekt 14 oder 15 umfassend Verlängerungsschrauben unterschiedlicher Länge, insbesondere in drei oder mehr unterschiedlichen Längen, zur Auswahl der nutzbaren Höhe zwischen zwei Klemmplatten.
17. Vorrichtung bzw. Bausatz nach einem der Aspekte 1 bis 7, umfassend eine Klemmpatte nach einem der Aspekte 10 bis 13 bzw. Merkmale nach einem der Aspekte 14 bis 16.

## Patentansprüche

1. Klemmplatte (210; 310) für eine Endbefestigung einer flexiblen Umhüllung (2) mit Leitungen (8), umfassend zwei kurze Schmalseiten (312) parallel zu einer Längsrichtung (L), die einer Längsrichtung einer festzulegenden Stützkette (9; 509) entspricht, und zwei lange Stirnseiten (311) parallel zu einer Querrichtung (Q), sowie zwei abgewandte Hauptflächen parallel zu einer Hauptebene, wobei die Klemmplatte (210; 310) plattenartig ausgeführt ist, d**adurch gekennzeichnet, dass** an jeder Stirnseite (311) eine in Längsrichtung (L) offene stirnseitige Haltenut (221; 321) vorgesehen ist, welche mit durchgehend gleichem Querschnitt von der einen zur anderen Schmalseite (312) verläuft und dort in Querrichtung (Q) offen mündet, sodass insbesondere Halteelemente (700), z.B. für Enden zu führender Leitungen (8) oder für endseitige Kettenglieder (510A, 510B), mittels in beide Haltenuten (221; 321) eingreifender Zungen (721) in Querrichtung (Q) einschiebbar und verschiebbar an der Klemmplatte (210, 310) montierbar sind.

2. Klemmplatte (210, 310) nach Anspruch 1, **dadurch gekennzeichnet, dass** die Klemmplatte (210, 310) mit einer rechteckigen Grundfläche und mit ebenen, flächigen Hauptflächen (22) ausgeführt ist.

3. Klemmplatte (210, 310) nach Anspruch 1 oder 2, **dadurch gekennzeichnet, dass** die Klemmplatte (210, 310) bezüglich mindestens zwei von drei Mittelebenen spiegelsymmetrisch ausgeführt ist, insbesondere bezüglich mindestens drei Mittelebenen im Wesentlichen spiegelsymmetrisch ausgeführt ist, nämlich der Mittelebene parallel zur Hauptebene, der Mittelebene senkrecht zur Hauptebene entlang der Längsrichtung (L) und der Mittelebene senkrecht zur Hauptebene entlang der Querrichtung (Q).

4. Klemmplatte (210, 310) nach Anspruch 1, 2 oder 3, **dadurch gekennzeichnet, dass** mindestens zwei, vorzugsweise drei, Befestigungslöcher (315) entlang der Längsrichtung (L) und nahe den Schmalseiten (312) angeordnet sind.

5. Bausatz umfassend zwei Klemmplatten (210; 310) nach einem der Ansprüche 1 bis 4 sowie mindestens vier Verlängerungsschrauben (450A, 450B, 450C), mit je einem Außengewinde (451) sowie einem Innengewinde (452) am Schraubenkopf passend zum Außengewinde (451), sowie entsprechende Innengewinde-Buchsen (460) passend zum Außengewinde (451).

6. Bausatz nach Anspruch 5, wobei jede Klemmplatte (210, 310) an mindestens zwei Befestigungslöchern (315) jeder Schmalseite (312), jeweils beidseitig gegenüberliegend am Befestigungsloch (315) Senkungen (317; 318) aufweist, insbesondere eine konische Senkung (317) zur Aufnahme eines Schraubenkopfes und eine zylindrische Senkung (318) zum Einpressen einer Innengewinde-Buchse (460).

7. Bausatz nach Anspruch 5 oder 6 umfassend Verlängerungsschrauben (450A, 450B, 450C) unterschiedlicher Länge, insbesondere in drei oder mehr unterschiedlichen Längen, zur Auswahl der nutzbaren Höhe zwischen zwei Klemmplatten (210; 310).

8. Endbefestigungsvorrichtung (20) für eine Leitungsführungsvorrichtung (1), die eine längliche, flexible Umhüllung (2) und mindestens eine Stützkette (9) zum Stützen der Umhüllung (2) umfasst, **dadurch gekennzeichnet, dass** die Endbefestigungsvorrichtung (20) zumindest zwei Klemmplatten (210; 310) nach einem der Ansprüche 1 bis 4 umfasst.

9. Endbefestigungsvorrichtung (20) nach Anspruch 8, **dadurch gekennzeichnet, dass** die Endbefestigungsvorrichtung (20) mindestens ein Kettenglied-Halteelement (700) zum Arretieren eines zugeordneten endseitigen Kettenglieds (510A, 510B) der Stützkette (9) in Längsrichtung (L) zwischen den zwei Klemmplatten (210) umfasst, wobei das Kettenglied-Halteelement (700) zwei seitlich und in Querrichtung gegenüberliegende Halte-Vertiefungen (705A, 705B) zur Aufnahme von Arretier-Vorsprüngen (570A, 570B) des endseitigen Kettenglieds (510A, 510B) aufweist.

10. Endbefestigungsvorrichtung (20) nach Anspruch 9, **dadurch gekennzeichnet, dass** das Kettenglied-Halteelement (700) an einer Vorderseite eine zur Hauptebene und in Längsrichtung offene Aufnahme für ein endseitiges Kettenglied bildet und an einer Rückseite an beiden Längsenden einander zugewandte Zungen (721) aufweist zur Verbindung, insbesondere in Art einer Feder-Nut-Verbindung, mit jeweils einer der zwei stirnseitigen Haltenuten (221; 321) an einer der Klemmplatten (210; 310).

11. Endbefestigungsvorrichtung (20) nach einem der Ansprüche 8 bis 10, umfassend eine Anzahl Zugentlastungselemente (23A, 23B, 23C, 23D), welche jeweils zwei Verbindungsbereiche (230) mit klauenförmigem Querschnitt zum Eingreifen in eine der zwei stirnseitigen Haltenuten (221; 321) aufweisen, wobei jede Klaue eines der Verbindungsbereiche (230) weniger als die Hälfte der freien Höhe der stirnseitigen Haltenut (221; 321) einnimmt, sodass beidseitig an einer der Klemmplatten (210; 310) jeweils Zugentlastungselemente (23A, 23B, 23C, 23D) mit entsprechenden Verbindungsbereichen (230) in die stirnseitigen Haltenuten (221; 321) eingreifen können.

12. Endbefestigungsvorrichtung (20) nach einem der Ansprüche 8 bis 11, wobei jeweils zwei der Klemmplatten (210; 310) an Endbereichen (214) durch Plattenverbinder (240A, 240B) miteinander verbunden sind, wobei jeder der Plattenverbinder (240A, 240B) jeweils an seiner Ober- und Unterseite jeweils einen Klammerbereich (242) mit zwei einander zugewandten stirnseitigen Klauen aufweist, die zumindest formschlüssig in die stirnseitigen Haltenuten (221; 321) der Klemmplatten (210; 310) greifen.

13. Leitungsführungsvorrichtung (1) für Leitungen (8), wie z.B. Kabel, Schläuche oder dgl., insbesondere für eine Reinraumanwendung, umfassend:
- mindestens eine längliche, flexible Umhüllung (2), die hin- und hergehend verfahrbar ist, und eine Anzahl von kanalartigen, sich in einer Längsrichtung (L) von einem ersten Ende zu einem zweiten Ende erstreckenden Aufnahmen (7) für Leitungen aufweist, wobei die Aufnahmen (7) in der Querrichtung (Q) seitlich nebeneinanderliegend angeordnet sind, und die Umhüllung (2) hin- und hergehend, insbesondere unter Bildung von zwei Trumen (1A, 1B) mit einem Umlenkbogens (1C) dazwischen verfahrbar ist;
- mindestens eine Stützkette (9), vorzugsweise zwei Stützketten, die sich in Längsrichtung (L) vom ersten Ende zum zweiten Ende der flexiblen Umhüllung (2) erstreckt um diese zu stützen, und die eine Vielzahl einzelner Kettenglieder umfasst, die gelenkig miteinander verbunden sind, wobei jedes Kettenglied einen Körper mit zwei äußeren Seitenflächen und korrespondierende erste und zweite Gelenkelemente aufweist, die zur schwenkbaren Verbindung zweier Kettenglieder in einer Ebene im Wesentlichen senkrecht zur Querrichtung gestaltet sind;
- eine erste Endbefestigungsvorrichtung (20) zum Festlegen des ersten Endes der Umhüllung (2) und der Stützkette (9), und eine zweite Endbefestigungsvorrichtung (20) zum Festlegen des zweiten Endes der Umhüllung (2) und der Stützkette (9);
- wobei jede Endbefestigungsvorrichtung (20) mindestens ein Kettenglied-Halteelement zum Arretieren eines zugeordneten endseitigen Kettenglieds der Stützkette (9) in Längsrichtung (L) zwischen zwei Klemmplatten (210) aufweist; **dadurch gekennzeichnet,**
- **dass** die Klemmplatten einer Endbefestigungsvorrichtung (20) jeweils nach einem der Ansprüche 1 bis 4 ausgeführt sind.

14. Leitungsführungsvorrichtung (1) nach Anspruch 13, **dadurch gekennzeichnet,**
- **dass** die Stützkette zwei endseitige Kettenglieder aufweist, die beide jeweils zwei voneinander abgewandte Arretier-Vorsprünge umfassen, die jeweils in Richtung im Wesentlichen parallel zur Querrichtung über die ersten und zweiten Gelenkelemente hinaus seitlich an einer der äußeren Seitenflächen vorstehen;
- **dass** die Kettenglied-Halteelemente (700) beider Endbefestigungsvorrichtungen (20) jeweils zwei seitlich und in Querrichtung gegenüberliegende Halte-Vertiefungen (705A, 705B) aufweisen; und
- **dass** die Arretier-Vorsprünge (570A, 570B) beider endseitiger Kettenglieder (510A, 510B) zum Arretieren jeweils in die Halte-Vertiefungen (705A, 705B) im zugeordneten Kettenglied-Halteelement (700) eingreifen, zum Arretieren der Stützkette (9) in Längsrichtung (L).
